# FASCICULE DE BREVET EUROPEEN

(11) **EP 3 861 614 B1**
(45) Date de publication et mention de la délivrance du brevet: **26.06.2024**
(21) Numéro de dépôt: 19795295.5
(22) Date de dépôt: 01.10.2019
(51) Int. Cl.: H02J 1/14, B64D 27/24, H02J 7/34, H02J 4/00, B64D 27/02

(54) **ARCHITECTURE ÉLECTRIQUE POUR PROPULSION HYBRIDE**
ELEKTRISCHE ARCHITEKTUR FÜR HYBRIDANTRIEB
ELECTRIC ARCHITECTURE FOR HYBRID PROPULSION

(30) Priorité: 04.10.2018 FR 1859208
(43) Date de publication de la demande: 11.08.2021
(73) Titulaire: SAFRAN, 75015 Paris (FR); SAFRAN AIRCRAFT ENGINES, 75015 Paris (FR); Safran Electrical & Power, 31702 Blagnac (FR)
(72) Inventeur: DELBOSC, Philippe, 31702 BLAGNAC (FR); LIENHARDT, Anne, 77550 MOISSY-CRAMAYEL (FR); DUPAYS, Clément, 77550 MOISSY-CRAMAYEL (FR); VIGUIER, Christophe, 77550 MOISSY-CRAMAYEL (FR); DHOKKAR, Sonia, 31702 BLAGNAC (FR)
(74) Mandataire: Cabinet Beau de Loménie
(86) Numéro de dépôt international: PCT/FR2019/052322
(87) Numéro de publication internationale: WO 2020/070438

(56) Documents cités:
- EP-A1- 2 974 964
- EP-A1- 3 276 774
- FR-A1- 3 004 701

## Description

### Arrière-plan de l'invention

L'invention concerne l'hybridation d'un système propulsif d'aéronef, et plus particulièrement la conception d'un système électrique interfacé avec l'aéronef et au moins une turbomachine permettant de fournir une propulsion hybride thermique/électrique.

De plus en plus de ces aéronefs fonctionnent avec des systèmes de propulsion hybride, c'est-à-dire avec un système comprenant une turbomachine, au moins un générateur électrique et au moins une batterie, car les systèmes purement électriques fonctionnant seulement à partir d'une batterie ne sont viables que pour le transport d'une charge sur une courte distance comme ceux sur le marché intra-urbain, l'autonomie des batteries, liée à la faible densité d'énergie des batteries par rapport à l'autonomie offerte par le carburant embarqué dans un réservoir d'un aéronef pour alimenter des turbomachines, n'étant pas suffisante pour les autres marchés, tel que le marché court-moyen courrier par exemple.

Le document EP 2 974 964 A1 divulgue un aéronef à propulsion hybride thermique/électrique.

### Objet et résumé de l'invention

L'invention vise à fournir un système électrique d'un aéronef interconnectant les sources d'énergie disponibles dans les turbomachines et le corps de l'aéronef et permettant de fournir ou de prélever une puissance contrôlée avec une ou plusieurs machines électriques sur les arbres haute pression et basse pression d'une turbomachine, d'assurer la compatibilité de l'ensemble de ces fonctions liées à la propulsion avec les fonctions de fournitures d'autre besoins énergétiques, et d'assurer une gestion optimisée de l'ensemble de ces prélèvements et fournitures d'énergies avec différentes sources d'énergies et moyens de stockage d'énergie.

Dans un premier objet de l'invention, il est proposé un aéronef à propulsion hybride thermique/électrique selon la revendication 1.

Le réseau de distribution électrique propulsif est destiné à alimenter les équipements de puissance importante, notamment les équipements liés au système propulsif. Ce réseau a le niveau de tension le plus élevé. L'utilisation de ce réseau de distribution uniquement pour les équipements de puissance importante permet de minimiser le courant à fournir, et par conséquent, permet de diminuer le nombre de câbles avec une section importante et ainsi de réduire l'encombrement et la masse dus aux câbles électriques.

Le réseau de distribution électrique propulsif est de type continu et d'un niveau de tension dépendant des puissances en jeu : 540 V, 750 V, 1000 V, 1500 V, 3000 V. Le niveau de tension est défini en fonction des paramètres suivants : puissance, courant, topologie et architecture électrique et masse. L'augmentation de la puissance électrique embarquée a un impact non négligeable sur la masse. Le choix de niveau de tension est de préférence le compromis optimum entre le rendement énergétique et la masse du système électrique.

Le réseau de distribution électrique non propulsif est destiné à alimenter en électricité les équipements de puissance intermédiaire, c'est-à-dire principalement les équipements liés au système non propulsif désignés également comme des charges « avion ». Ce réseau est de type continu.

Le réseau de distribution électrique non propulsif a un niveau de tension intermédiaire (par exemple 540 VDC) inférieur au niveau de tension du réseau de distribution électrique propulsif.

Le réseau de distribution électrique basse tension est destiné à alimenter en électricité les charges de faible puissance des turbomachines ou de l'avion. Ce réseau est de type continu, et par exemple de l'ordre de 28 VDC.

De préférence, le système électrique local comprend une première machine électrique mécaniquement couplée à un arbre basse pression de la turbomachine, au moins une seconde machine électrique mécaniquement couplée à un arbre haute pression de la turbomachine, des convertisseurs de puissance, tels que des convertisseurs alternatif-continu réversibles, et une unité électronique de commande locale configurée pour commander l'alimentation des charges locales de la turbomachine en fonction des sources électriques disponibles de l'aéronef, les première et seconde machines électriques étant des premières sources électriques lorsqu'elles fonctionnent en mode générateur et des charges locales lorsqu'elles fonctionnent en mode moteur, notamment pour le démarrage.

La première machine électrique peut être mécaniquement couplée à un arbre basse pression de la turbomachine en liaison directe ou par le biais d'une boite de réduction, c'est-à-dire d'un système d'engrenages.

Par sources électriques disponibles, on entend les sources électriques délivrant un courant d'alimentation.

Les convertisseurs de puissance permettent de piloter les moteurs pendant les phases de fonctionnement en mode moteur et assurer la régulation de la tension réseau pendant les phases de génération d'énergie électrique.

Le système électrique local peut avantageusement comprendre une prise électrique permettant le raccordement d'une source électrique externe.

La prise électrique du système électrique local permet de faire tourner la turbomachine munie de ce système électrique local à basse vitesse par exemple sans démarrer la turbomachine, à l'aide d'un outillage au sol.

La prise électrique peut être associée à un convertisseur alternatif-continu dans le cas où la source électrique externe couplée à la prise électrique n'est pas continue.

Avantageusement, le système électrique local peut comprendre en outre un convertisseur de courant unidirectionnel entre le second boîtier de distribution électrique local et le premier boîtier de distribution électrique local afin de permettre l'alimentation des charges locales basse tension.

Le système électrique local peut avantageusement comprendre en outre un moyen de stockage d'énergie local associé à un convertisseur continu/continu.

De préférence, le système électrique principal comprend deux premiers sous-systèmes et un second sous-système de secours, chaque premier sous-système comprenant un premier boîtier de distribution électrique principal raccordé au réseau de distribution électrique basse tension, un deuxième boîtier de distribution électrique principal raccordé au réseau de distribution électrique propulsif, un troisième boîtier de distribution électrique principal raccordé au réseau de distribution électrique non propulsif, les boîtiers de distribution électrique principaux assurant les interconnexions entre les sources électriques de l'aéronef disponibles, les charges du système électrique principal et les sous-systèmes électriques.

Avantageusement, chaque premier sous-système électrique peut comprendre en outre un convertisseur unidirectionnel entre le troisième boîtier de distribution électrique principal et le premier boîtier de distribution électrique principal, et un convertisseur bidirectionnel entre le deuxième boîtier de distribution électrique principal et le troisième boîtier de distribution électrique principal, afin de permettre l'alimentation des charges dans différentes configurations.

De préférence, chaque premier sous-système électrique comprend une machine électrique auxiliaire mécaniquement couplée à un groupe auxiliaire de puissance et associée à convertisseur de puissance alternatif-continu réversible, et une unité électronique de commande principale configurée pour commander l'alimentation des charges du premier sous-système en fonction des sources électriques disponibles de l'aéronef, la machine électrique auxiliaire étant une première source électrique lorsqu'elle fonctionne en mode générateur et une charge locale lorsqu'elle fonctionne en mode moteur.

Avantageusement, chaque premier sous-système électrique peut comprendre une prise électrique permettant le raccordement d'une source électrique externe pour assurer les fonctions d'alimentation de l'aéronef et des moteurs lorsqu'aucune source électrique interne à l'aéronef n'est disponible.

Chaque premier sous-système électrique peut avantageusement comprendre en outre un moyen de stockage d'énergie associé à un convertisseur continu/continu formant une seconde source électrique.

Le moyen de stockage peut être mutualisé pour les besoins d'hybridation turbomachine et de charges non propulsives ou ségrégué pour en dédier une partie aux charges non propulsives et une partie à l'hybridation. Le moyen de stockage est également utilisé pour permettre des reconfigurations sans coupure des charges (Fonction No Break Power Transfer).

Le convertisseur, par exemple un convertisseur continu/continu, permet de maintenir la tension constante du côté réseau malgré une variation importante du côté stockeur et permet d'assurer la charge du stockeur si cette source d'énergie est une batterie. Cette architecture offre l'opportunité d'adapter le niveau de tension au niveau du réseau pour assurer le mode de partage de puissance, aussi appelé en anglais « sharing power mode ».

De préférence, le second sous-système électrique comprend un premier boîtier de distribution électrique de secours raccordé au réseau de distribution électrique basse tension, un second boîtier de distribution électrique de secours raccordé au réseau de distribution électrique non propulsif, les boîtiers de distribution électrique de secours étant alimentés par lesdites au moins une première et/ou seconde sources électriques lorsqu'au moins l'une d'entre elles est disponible, et les boîtiers de distribution électrique de secours assurant les interconnexions entre les sources électriques de l'aéronef disponibles et les charges du second sous-système électrique.

Avantageusement, les premier et second boîtiers de distribution électrique de secours peuvent être alimentés chacun par un générateur de secours ou par une autre source électrique en liaison directe avec le boîtier de distribution électrique de secours.

Avantageusement, le second sous-système électrique peut comprendre une unité électronique de commande de secours configurée pour commander l'alimentation des charges du second sous-système en fonction des sources électriques disponibles de l'aéronef.

### Brève description des dessins.

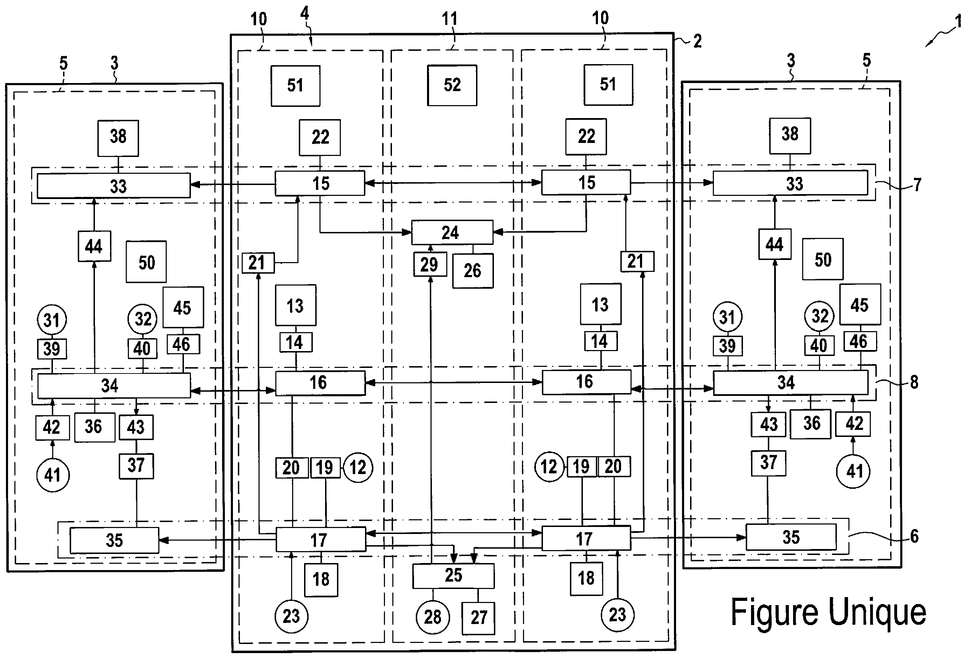

L'invention sera mieux comprise à la lecture faite ci-après, à titre indicatif mais non limitatif, en référence au dessin annexé sur lequel la figure unique représente une architecture électrique d'un aéronef selon un mode de réalisation de l'invention.

### Description détaillée de modes de réalisation

Sur la figure unique est représentée une architecture électrique d'un aéronef à propulsion hybride thermique/électrique selon un mode de réalisation de l'invention.

L'aéronef 1 comprend un corps 2 comportant un fuselage et deux ailes, et deux turbomachines 3. Le corps 2 de l'aéronef 1 comprend un système électrique principal 4 dont les composants sont montés dans le corps 2 de l'aéronef 1, et chaque turbomachine 3 comprend un système électrique local 5 dont les composants sont montés dans une nacelle de la turbomachine 3.

Par ailleurs, l'aéronef 1 comprend un réseau de distribution électrique non propulsif 6, un réseau de distribution électrique basse tension 7 et un réseau de distribution électrique propulsif 8 électriquement interconnectés par des convertisseurs statiques.

Les trois réseaux de distribution électrique 6 à 8 sont transverses par rapport aux systèmes électriques 4 et 5, c'est-à-dire que chacun des trois réseaux de distribution électrique 6 à 8 est implanté dans le système électrique principal 4 et dans les systèmes électriques locaux 5. Ainsi, chacun des trois réseaux de distribution électrique 6 à 8 connecte le système électrique principal 4 aux systèmes électriques locaux 5.

Le réseau de distribution électrique propulsif est destiné à alimenter les équipements de puissance importante, notamment les équipements liés au système propulsif. Ce réseau a le niveau de tension le plus élevé. Le réseau de distribution électrique propulsif est de type continu et d'un niveau de tension dépendant des puissances en jeu et qui peut être de l'ordre de plusieurs centaines de volts à plusieurs milliers de volts.

Le réseau de distribution électrique non propulsif est destiné à alimenter en électricité les équipements de puissance intermédiaire, c'est-à-dire principalement les équipements liés au système non propulsif désignés également comme des charges « avion ». Ce réseau est de type continu. Le réseau de distribution électrique non propulsif a un niveau de tension intermédiaire (par exemple 540 VDC) inférieur au niveau de tension du réseau de distribution électrique propulsif.

Le réseau de distribution électrique basse tension est destiné à alimenter en électricité les charges de faible puissance des turbomachines ou de l'avion. Ce réseau est de type continu, et par exemple de l'ordre de 28 VDC.

Le système électrique principal 4 de l'aéronef 1 comprend deux sous-systèmes de base 10 et un sous-système de secours 11.

Chaque sous-système comprend une machine électrique auxiliaire 12 formant une première source électrique et un stockeur d'énergie 13 associé à un convertisseur continu-continu (DC/DC) 14 formant une seconde source électrique.

Le convertisseur DC/DC 14 permet de maintenir la tension constante du côté réseau malgré une variation importante du côté stockeur 13 et permet d'assurer la charge du stockeur 13 si cette source d'énergie est une batterie par exemple.

Le stockeur d'énergie 13 et son convertisseur DC/DC 14 peut être mutualisé pour les besoins d'hybridation de la turbomachine et les besoins pour les charges non propulsives ou bien ségrégé en deux parties pour en dédier une partie aux charges non propulsives et une partie à l'hybridation par exemple à l'aide de deux stockeurs d'énergie et deux convertisseurs DC/DC.

Chaque sous-système de base 10 comprend un boîtier de distribution électrique basse tension 15 raccordé au réseau de distribution électrique basse tension 7, un boîtier de distribution électrique propulsif 16 raccordé au réseau de distribution électrique propulsif 8 et un boîtier de distribution électrique non propulsif 17 raccordé au réseau de distribution électrique non propulsif 6.

Les boîtiers de distribution électrique 15 à 17 de chaque sous-système de base 10 assurent les interconnexions entre les sources électriques de l'aéronef disponibles comme par exemple les machines électriques auxiliaires 12 et les stockeurs d'énergies 13 du système électrique principal 4, les sous-systèmes électriques 10 et 11, les systèmes électriques locaux 5, et les charges non propulsives 18 et les charges basse tension 22 du système électrique principal 4.

Le boîtier de distribution électrique non propulsif 17 de chaque sous-système électrique de base 10 est électriquement raccordé à la machine électrique auxiliaire 12 via un convertisseur alternatif-continu (AC/DC) 19.

Chaque sous-système électrique de base 10 comprend en outre un premier convertisseur DC/DC 20 couplé entre le boîtier de distribution électrique propulsif 16 et le boîtier de distribution électrique non propulsif 17, et un second convertisseur DC/DC 21 couplé entre le boîtier de distribution électrique non propulsif 17 et le boîtier de distribution électrique basse tension 15. L'énergie fournie par la machine électrique auxiliaire 12 peut ainsi être transférée au boîtier de distribution électrique propulsif 16 via le premier convertisseur DC/DC 20 et au boîtier de distribution électrique basse tension 15 via le second convertisseur DC/DC 21 pour alimenter les charges basse tension 22 du système électrique principal 4.

Le premier convertisseur DC/DC 20 est bidirectionnel afin de pouvoir transférer de l'énergie électrique dans les deux sens entre le boîtier de distribution électrique propulsif 16 et le boîtier de distribution électrique non propulsif 17, c'est-à-dire entre le réseau de distribution électrique propulsif 8 et le réseau de distribution électrique non propulsif 6. Le second convertisseur DC/DC 21 en revanche est unidirectionnel en courant.

Dans une variante, le convertisseur AC/DC 19 peut être couplé entre la machine électrique auxiliaire 12 et le boîtier de distribution électrique propulsif 16, l'énergie délivrée par la machine électrique auxiliaire 12 pouvant être transférée au boîtier de distribution électrique non propulsif 17 via le premier convertisseur DC/DC 20, puis au boîtier de distribution électrique basse tension 15 via le second convertisseur DC/DC 21.

La machine électrique auxiliaire 12 est mécaniquement liée au groupe auxiliaire de puissance. La machine électrique auxiliaire 12 et le convertisseur AC/DC 19 associé assure le démarrage du groupe auxiliaire de puissance et alimente les charges non propulsives 18 du système électrique principal 4, dites « charges avion », mais peut également fournir de la puissance complémentaire sur le réseau de distribution électrique propulsif 8.

Chaque sous-système électrique de base 10 comprend également une prise électrique 23 permettant le raccordement d'une source électrique externe pour assurer l'alimentation des différentes charges de l'aéronef 1 et des moteurs 3 lorsqu'aucune source électrique interne à l'aéronef 1 n'est disponible.

Le sous-système de secours 11 comprend un boîtier de distribution électrique de secours basse tension 24 raccordé au réseau de distribution électrique basse tension 7 et un boîtier de distribution électrique de secours non propulsif 25 raccordé au réseau de distribution électrique non propulsif 6. Les boîtiers de distribution électrique de secours 24 et 25 alimentent uniquement les charges de secours basse tension 26 et les charges de secours non propulsives 27 du système électrique principal 4.

Les boîtiers de distribution électrique de secours 24 et 25 sont alimentés par l'une des machines électriques 12 et l'un des stockeurs d'énergie 13 des deux sous-systèmes de base 10 lorsqu'au moins l'une de ces sources électrique est disponible. Les boîtiers de distribution électrique de secours assurent ainsi les interconnexions entre les sources électriques du système électrique principal 4 disponibles et les charges de secours 26 et 27.

Dans le mode de réalisation illustré sur la figure unique, le sous-système de secours comprend également un générateur de secours supplémentaire 28 électriquement raccordé au boîtier de distribution électrique de secours non propulsif 25 qui est électriquement couplé au boîtier de distribution électrique de secours basse tension 24 via un convertisseur DC/DC 29 unidirectionnel pour alimenter le boîtier de distribution électrique de secours basse tension 24.

Le générateur de secours supplémentaire 28 peut être entraîné par un moyen d'entraînement tel qu'une machine électrique auxiliaire 12 par exemple si le besoin de puissance est significatif, ou une éolienne de secours, ou « ram air turbine » en anglais, si la puissance requise est limitée.

Dans une variante, le générateur de secours supplémentaire 28 peut être remplacée par une autre source de bord avec une liaison directe au boîtier de distribution électrique de secours non propulsif 25, c'est-à-dire sans passer par un des boîtiers de distribution électrique 15 à 17 d'un sous-système de base 10. L'autre source de bord peut être un des stockeurs d'énergie 13 ou une partie de ces stockeurs, ou bien une des machines électriques auxiliaires 12.

Chaque système électrique local 5 comprend une première machine électrique 31 mécaniquement couplée à un arbre basse pression de la turbomachine 3 soit directement soit par le biais d'une boîte de réduction, c'est-à-dire d'un système d'engrenages, et une seconde machine électrique 32 mécaniquement couplée à un arbre haute pression de la turbomachine 3 soit directement soit par le biais d'une boîte de réduction, c'est-à-dire d'un système d'engrenages.

Dans une variante, chaque système électrique local 5 peut comprendre deux secondes machines électriques mécaniquement couplées à un arbre haute pression, ou bien une machine électrique comportant deux stators indépendants associés à deux convertisseurs AC/DC, ou encore une machine électrique comportant un seul stator associé à deux convertisseurs AC/DC.

Chaque système électrique local 5 comprend en outre un stockeur d'énergie 45 associé à un convertisseur électrique continu-continu 46.

Les première et seconde machines électriques 31 et 32 des systèmes électriques locaux 5 forment une première source électrique de l'aéronef tandis que les stockeurs d'énergie 45 associé à leur convertisseur continu-continu 46 forment une seconde source électrique de l'aéronef.

Chaque système électrique local 5 comprend en outre un boîtier de distribution électrique local basse tension 33 raccordé au réseau de distribution électrique basse tension 7, un boîtier de distribution électrique local propulsif 34 raccordé au réseau de distribution électrique propulsif 8, et un boîtier de distribution électrique local non propulsif 35 raccordé au réseau de distribution électrique non propulsif 6.

Les boîtiers de distribution électrique locaux 33 à 35 assurent, avec les boîtiers de distribution électrique 15 à 17 des sous-systèmes de base 10, les interconnexions entre les sources électriques disponibles des turbomachines 3 ou de corps 2 de l'aéronef, telles que les machines électriques 12, 31 et 32 et les stockeurs d'énergie 13 et 45, et les interconnexions entre les charges locales propulsives 36, non propulsives 37 et basse tension 38 du système électrique local 5, ou avec les charges 18, 22, 26 et 27 du système électrique principal 4.

Les boîtiers de distribution électrique de secours 24 et 25 peuvent être également alimentés par l'une des machines électriques 31 32 des systèmes électrique locaux lorsqu'au moins l'une de ces sources électrique est disponible.

Chaque système électrique local 5 comprend également deux convertisseurs de puissance AC/DC réversibles 39 et 40 raccordés respectivement entre la première machine électrique 31 et le boîtier de distribution électrique local propulsif 34 et entre la seconde machine électrique 32 et le boîtier de distribution électrique local propulsif 34. Les convertisseurs de puissance AC/DC 39 et 40 sont configurés pour piloter les turbomachines 3 pendant les phases d'injection de puissance ou les phases de fonctionnement en mode moteur, comme la phase de démarrage et pour assurer la régulation de la tension du réseau de distribution électrique propulsif 8 pendant les phases de génération.

Chaque système électrique local 5 comprend également une prise électrique 41 permettant de faire tourner la turbomachine 3 à basse vitesse par exemple sans démarrer la turbomachine 3, à l'aide d'un outillage au sol.

Dans le mode de réalisation illustré sur la figure unique, la prise électrique 41 est couplée au boîtier de distribution électrique local propulsif 34 via un convertisseur AC/DC 42 pour le cas où la source électrique externe couplée à la prise électrique n'est pas continue.

Chaque système électrique local 5 comprend également un premier convertisseur DC/DC 43 unidirectionnel couplé entre le boîtier de distribution électrique local propulsif 34 et les charges locales propulsives 36 pour alimenter les charges locales propulsives à partir du réseau de distribution électrique propulsif 8, et un second convertisseur DC/DC 44 unidirectionnel entre le boîtier de distribution électrique local propulsif 34 et le boîtier de distribution électrique local basse tension 33 pour alimenter les charges locales basse tension 38 du système électrique local 5.

Chaque système de distribution électrique local 5 comprend une unité électronique de commande locale 50 configurée pour commander l'alimentation des charges locales 36 à 38 de la turbomachine 3 en fonction des sources électriques disponibles 12, 13, 31, 32 et 45 de l'aéronef 1.

Chaque sous-système électrique de base 10 comprend une unité électronique de commande de base 51 configurée pour commander l'alimentation des charges 18 et 22 du sous-système de base 10 en fonction des sources électriques disponibles 12, 13, 31, 32 et 54 de l'aéronef 1.

Enfin, chaque sous-système électrique de secours 11 comprend une unité électronique de commande de secours 52 configurée pour commander l'alimentation des charges de secours 26 et 27 en fonction des sources électriques disponibles 12, 13, 28, 31, 32 et 45 de l'aéronef 1.

L'invention offre ainsi un système électrique interfacé avec l'aéronef et la (ou les) turbomachine(s) permettant de fournir ou de prélever une puissance contrôlée avec une ou plusieurs machines électriques sur les arbres haute pression et basse pression de la turbomachine, assurer la compatibilité de l'ensemble de ces fonctions liées à la propulsion avec les fonctions de fournitures d'autre besoins énergétiques, et assurer une gestion optimisée de l'ensemble de ces prélèvements et fournitures d'énergies avec différentes sources d'énergies et moyens de stockage d'énergie en fonction d'un profil de mission. L'architecture électrique offre une certaine souplesse supplémentaire grâce à la possibilité donnée de prélever et d'injecter de l'énergie selon le mode de fonctionnement, ce qui permet de réduire la puissance embarquée au niveau de l'aéronef.

## Revendications

1. Aéronef (1) à propulsion hybride thermique/électrique comprenant au moins une turbomachine (3), au moins une première source électrique (12, 31, 32), au moins une seconde source électrique (13, 45) munie de moyens de stockage d'énergie électrique, un réseau de distribution électrique non propulsif (6), un réseau de distribution électrique basse tension (7), et un réseau de distribution électrique propulsif (8), les trois réseaux de distribution électriques (6, 7, 8) étant électriquement alimentés par les première et seconde sources électriques (12, 31, 32, 13, 45) et électriquement interconnectés par des convertisseurs statiques (20, 21, 44)
**caractérisé en ce que** les trois réseaux de distribution électriques (6, 7, 8) sont de type continu, et les convertisseurs statiques (20, 21, 44) sont des convertisseurs statiques continu-continu et
**en ce que** l'aéronef (1) comprend en outre un système électrique principal (4) monté dans le corps (2) de l'aéronef (1) et, pour la ou chaque turbomachine (3) de l'aéronef (1), un système électrique local (5) monté dans la turbomachine (3),
le système électrique local (5) comprenant un premier boîtier de distribution électrique local (33) raccordé au réseau de distribution électrique basse tension (7), et un second boîtier de distribution électrique local (34) raccordé au réseau de distribution électrique propulsif (8), les premier et second boîtiers de distribution électrique locaux (33, 34) assurant les interconnexions entre les sources électriques de l'aéronef (1) et les interconnexions entre les charges locales (36, 37, 38) de la turbomachine (3) ou avec les charges (18, 22) du système électrique principal (4).

2. Aéronef (1) selon la revendication 1, dans lequel le système électrique local (5) comprend une première machine électrique (31) mécaniquement couplée à un arbre basse pression de la turbomachine (3), au moins une seconde machine électrique (32) mécaniquement couplée à un arbre haute pression de la turbomachine (3), des convertisseurs de puissance continu-alternatif réversibles (39, 40), et une unité électronique de commande locale (50) configurée pour commander l'alimentation des charges locales (36, 37, 38) de la turbomachine (3) en fonction des sources électriques disponibles de l'aéronef (1), les première et seconde machines électriques (31, 32) étant des premières sources électriques lorsqu'elles fonctionnent en mode générateur et des charges locales lorsqu'elles fonctionnent en mode moteur.

3. Aéronef (1) selon l'une des revendications 1 ou 2, dans lequel le système électrique local (5) comprend une prise électrique (41) permettant le raccordement d'une source électrique externe.

4. Aéronef (1) selon l'une des revendications 1 à 3, dans lequel le système électrique local (5) comprend en outre un convertisseur statique unidirectionnel en courant (44) entre le second boîtier de distribution électrique local (34) et le premier boîtier de distribution électrique local (33).

5. Aéronef (1) selon l'une des revendications 1 à 4, dans lequel le système électrique local (5) comprend en outre un moyen de stockage d'énergie local (45) associé à un convertisseur continu/continu (46) formant une seconde source électrique.

6. Aéronef (1) selon l'une des revendications 1 à 5, dans lequel le système électrique principal (4) comprend deux premiers sous-systèmes (10) et un second sous-système de secours (11), chaque premier sous-système (10) comprenant un premier boîtier de distribution électrique principal (15) raccordé au réseau de distribution électrique basse tension (7), un deuxième boîtier de distribution électrique principal (16) raccordé au réseau de distribution électrique propulsif (8), un troisième boîtier de distribution électrique principal (17) raccordé au réseau de distribution électrique non propulsif (6), les boîtiers de distribution électrique principaux (15, 16, 17) assurant les interconnexions entre les sources électriques disponibles de l'aéronef, les charges (18, 22) du système électrique principal (4) et les sous-systèmes électriques (10, 11).

7. Aéronef (1) selon la revendication 6, dans lequel chaque premier sous-système électrique (10) comprend en outre un convertisseur statique unidirectionnel en courant (21) entre le troisième boîtier de distribution électrique principal (17) et le premier boîtier de distribution électrique principal (15), et un convertisseur statique bidirectionnel en courant (20) entre le deuxième boîtier de distribution électrique principal (16) et le troisième boîtier de distribution électrique principal (17).

8. Aéronef (1) selon l'une des revendications 6 ou 7, dans lequel chaque premier sous-système électrique (10) comprend une machine électrique auxiliaire (12) mécaniquement couplée à un groupe auxiliaire de puissance et associée à convertisseur de puissance alternatif-continu réversible (19), et une unité électronique de commande principale (51) configurée pour commander l'alimentation des charges (18, 22) du premier sous-système (10) en fonction des sources électriques disponibles l'aéronef (1), la machine électrique auxiliaire (12) étant une première source électrique lorsqu'elle fonctionne en mode générateur et une charge locale lorsqu'elle fonctionne en mode moteur.

9. Aéronef (1) selon l'une des revendications 6 à 8, dans lequel chaque premier sous-système électrique (10) comprend une prise électrique (23) permettant le raccordement d'une source électrique externe.

10. Aéronef (1) selon l'une des revendications 6 à 9, dans lequel chaque premier sous-système électrique (10) comprend en outre un moyen de stockage d'énergie (13) associé à un convertisseur continu-continu (14) formant une seconde source électrique.

11. Aéronef (1) selon l'une des revendications 6 à 10, dans lequel le second sous-système électrique (11) comprend un premier boîtier de distribution électrique de secours (24) raccordé au réseau de distribution électrique basse tension (7), un second boîtier de distribution électrique de secours (25) raccordé au réseau de distribution électrique non propulsif (6), les boîtiers de distribution électrique de secours(24, 25) étant alimentés par lesdites au moins une première et/ou seconde sources électriques lorsqu'au moins l'une d'entre elles est disponible, et les boîtiers de distribution électrique de secours (24, 25) assurant les interconnexions entre les sources électriques disponibles de l'aéronef (1) et les charges (26, 27) du second sous-système électrique.

12. Aéronef (1) selon la revendication 11, dans lequel les premier et second boîtiers de distribution électrique de secours (24, 25) sont alimentés chacun par un générateur de secours (28) ou par une autre source électrique en liaison directe avec le second boîtier de distribution électrique de secours (25).

13. Aéronef (1) selon l'une des revendications 11 ou 12, dans lequel le second sous-système électrique (11) comprend une unité électronique de commande de secours (52) configurée pour commander l'alimentation des charges (26, 27) du second sous-système (11) en fonction des sources électriques disponibles de l'aéronef (1).

## Patentansprüche

1. Luftfahrzeug (1) mit thermischem/elektrischem Hybridantrieb, umfassend zumindest eine Turbomaschine (3), zumindest eine erste elektrische Quelle (12, 31, 32), zumindest eine zweite elektrische Quelle (13, 45), die mit Mitteln zur Speicherung elektrischer Energie ausgestattet ist, ein elektrisches Nichtantriebs-Verteilernetz (6), ein elektrisches Niederspannungs-Verteilernetz (7), und ein elektrisches Antriebs-Verteilernetz (8), wobei die drei elektrischen Verteilernetze (6, 7, 8) elektrisch durch die erste und zweite elektrische Quelle (12, 31, 32, 13, 45) versorgt werden und untereinander durch statische Wandler (20, 21, 44) elektrisch verbunden sind, **dadurch gekennzeichnet, dass** die drei elektrischen Verteilernetze (6, 7, 8) vom Gleichstromtyp sind und die statischen Wandler (20, 21, 44) statische Gleichstrom-Gleichstrom-Wandler sind und
dass das Luftfahrzeug (1) ferner ein elektrisches Hauptsystem (4) umfasst, das in dem Körper (2) des Luftfahrzeugs (1) montiert ist, und für die oder jede Turbomaschine (3) des Luftfahrzeugs (1) ein lokales elektrisches System (5), das in der Turbomaschine (3) montiert ist,
wobei das lokale elektrische System (5) einen ersten lokalen elektrischen Verteilerschrank (33), der mit dem elektrischen Niederspannungs-Verteilernetz (7) verbunden ist, und einen zweiten lokalen elektrischen Verteilerschrank (34) umfasst, der mit dem elektrischen Antriebs-Verteilernetz (8) verbunden ist, wobei der erste und zweite lokale elektrische Verteilerschrank (33, 34) die Verbindungen zwischen den elektrischen Quellen des Luftfahrzeugs (1) und die Verbindungen zwischen den lokalen Lasten (36, 37, 38) der Turbomaschine (3) oder mit den Lasten (18, 22) des elektrischen Hauptsystems (4) sicherstellen.

2. Luftfahrzeug (1) nach Anspruch 1, wobei das lokale elektrische System (5) eine erste elektrische Maschine (31), die mechanisch mit einer Niederdruckwelle der Turbomaschine (3) gekoppelt ist, zumindest eine zweite elektrische Maschine (32), die mechanisch mit einer Hochdruckwelle der Turbomaschine (3) gekoppelt ist, reversible Gleichstrom-Wechselstrom-Leistungswandler (39, 40) und eine lokale elektronische Steuereinheit (50) umfasst, die dazu ausgestaltet ist, die Versorgung der lokalen Lasten (36, 37, 38) der Turbomaschine (3) in Abhängigkeit von den verfügbaren elektrischen Quellen des Luftfahrzeugs (1) zu steuern, wobei die erste und zweite elektrische Maschine (31, 32) erste elektrische Quellen sind, wenn sie im Generator-Modus arbeiten, und lokale Lasten sind, wenn sie im Motor-Modus arbeiten.

3. Luftfahrzeug (1) nach einem der Ansprüche 1 oder 2, wobei das lokale elektrische System (5) eine elektrische Anschlussdose (41) umfasst, welche den Anschluss einer externen elektrischen Quelle erlaubt.

4. Luftfahrzeug (1) nach einem der Ansprüche 1 bis 3, wobei das lokale elektrische System (5) ferner einen unidirektionalen statischen Stromwandler (44) zwischen dem zweiten lokalen elektrischen Verteilerschrank (34) und dem ersten lokalen elektrischen Verteilerschrank (33) umfasst.

5. Luftfahrzeug (1) nach einem der Ansprüche 1 bis 4, wobei das lokale elektrische System (5) ferner ein lokales Mittel zur Speicherung von Energie (45) umfasst, das einem Gleichstrom-Gleichstrom-Wandler (46) zugeordnet ist, die eine zweite elektrische Quelle bildet.

6. Luftfahrzeug (1) nach einem der Ansprüche 1 bis 5, wobei das elektrische Hauptsystem (4) zwei erste Teilsysteme (10) und ein zweites Notversorgungs-Teilsystem (11) umfasst, wobei jedes erste Teilsystem (10) einen ersten elektrischen Haupt-Verteilerschrank (15), der mit dem elektrischen Niederspannungs-Verteilernetz (7) verbunden ist, einen zweiten elektrischen Haupt-Verteilerschrank (16), der mit dem elektrischen Antriebs-Verteilernetz (8) verbunden ist, und einen dritten elektrischen Haupt-Verteilerschrank (17) umfasst, der mit dem elektrischen Nichtantriebs-Verteilernetz (6) verbunden ist, wobei die elektrischen Haupt-Verteilerschränke (15, 16, 17) die Verbindungen zwischen den verfügbaren elektrischen Quellen des Luftfahrzeugs, den Lasten (18, 22) des elektrischen Hauptsystems (4) und den elektrischen Teilsystemen (10, 11) sicherstellen.

7. Luftfahrzeug (1) nach Anspruch 6, wobei jedes erste elektrische Teilsystem (10) ferner einen unidirektionalen statischen Stromwandler (21) zwischen dem dritten elektrischen Haupt-Verteilerschrank (17) und dem ersten elektrischen Haupt-Verteilerschrank (15) und einen bidirektionalen statischen Stromwandler (20) zwischen dem zweiten elektrischen Haupt-Verteilerschrank (16) und dem dritten elektrischen Haupt-Verteilerschrank (17) umfasst.

8. Luftfahrzeug (1) nach einem der Ansprüche 6 oder 7, wobei jedes erste elektrische Teilsystem (10) eine elektrische Zusatz-Maschine (12), die mechanisch mit einer Zusatz-Leistungsgruppe gekoppelt und einem reversiblen Wechselstrom-Gleichstrom-Leistungswandler (19) zugeordnet ist, und eine elektronische Haupt-Steuereinheit (51) umfasst, die dazu ausgestaltet ist, die Versorgung der Lasten (18, 22) des ersten Teilsystems (10) in Abhängigkeit von den verfügbaren elektrischen Quellen des Luftfahrzeugs (1) zu steuern, wobei die elektrische Zusatz-Maschine (12) eine erste elektrische Quelle ist, wenn sie im Generator-Modus arbeitet, und eine lokale Last ist, wenn sie im Motor-Modus arbeitet.

9. Luftfahrzeug (1) nach einem der Ansprüche 6 oder 8, wobei jedes erste elektrische Teilsystem (10) eine elektrische Anschlussdose (23) umfasst, welche den Anschluss einer externen elektrischen Quelle erlaubt.

10. Luftfahrzeug (1) nach einem der Ansprüche 6 bis 9, wobei jedes erste elektrische Teilsystem (10) ferner ein Mittel zur Speicherung von Energie (13) umfasst, das einem Gleichstrom-Gleichstrom-Wandler (14) zugeordnet ist, die eine zweite elektrische Quelle bildet.

11. Luftfahrzeug (1) nach einem der Ansprüche 6 bis 10, wobei das zweite elektrische Teilsystem (11) einen ersten elektrischen Notversorgungs-Verteilerschrank (24), der mit dem elektrischen Niederspannungs-Verteilernetz (7) verbunden ist, und einen zweiten elektrischen Notversorgungs-Verteilerschrank (25) umfasst, der mit dem elektrischen Nichtantriebs-Verteilernetz (6) verbunden ist, wobei die elektrischen Notversorgungs-Verteilerschränke (24, 25) durch die zumindest einen ersten und/oder zweiten elektrischen Quellen versorgt werden, wenn zumindest eine davon verfügbar ist, und die elektrischen Notversorgungs-Verteilerschränke (24, 25) die Verbindungen zwischen den verfügbaren elektrischen Quellen des Luftfahrzeugs (1) und den Lasten (26, 27) des zweiten elektrischen Teilsystems sicherstellen.

12. Luftfahrzeug (1) nach Anspruch 11, wobei der erste und zweite elektrische Notversorgungs-Verteilerschrank (24, 25) jeweils durch einen Notversorgungs-Generator (28) oder durch eine andere elektrische Quelle in direkter Verbindung mit dem zweiten elektrischen Notversorgungs-Verteilerschrank (25) versorgt werden.

13. Luftfahrzeug (1) nach einem der Ansprüche 11 oder 12, wobei das zweite elektrische Teilsystem (11) eine elektronische Notversorgungs-Steuereinheit (52) umfasst, die dazu ausgestaltet ist, die Versorgung der Lasten (26, 27) des zweiten Teilsystems (11) in Abhängigkeit von den verfügbaren elektrischen Quellen des Luftfahrzeugs (1) zu steuern.

## Claims

1. An aircraft (1) with hybrid thermal/electrical propulsion comprising at least a turbomachine (3), at least a first electrical source (12, 31, 32), at least a second electrical source (13, 45) equipped with electrical energy storage means, a non-propulsion electrical distribution network (6) and a low-voltage electrical distribution network (7), and a propulsion electrical distribution network (8), the three electrical distribution networks (6, 7, 8) being electrically supplied by the first and second electrical sources (12, 31, 32, 13, 45) and electrically interconnected by static converters (20, 21, 44),
**characterized in that** the aircraft further comprises a main electrical system (4) mounted in the body (2) of the aircraft (1) and, for the or each turbomachine (3) of the aircraft (1), a local electrical system (5) mounted in the turbomachine (3),
the local electrical system (5) comprising a first local electrical distribution casing (33) connected to the low-voltage electrical distribution network (7), a second local electrical distribution casing (34) connected to the propulsion electrical distribution network (8), the first and second local electrical distribution casings (33, 34) ensuring the interconnections between the electrical sources of the aircraft (1) and the interconnections between the local loads (36, 37, 38) of the turbomachine (3) or with the loads (18, 22) of the main electrical system (4).

2. The aircraft (1) according to claim 1, wherein the local electrical system (5) comprises a first electrical machine (31) mechanically coupled to a low-pressure shaft of the turbomachine (3), at least a second electrical machine (32) mechanically coupled to a high-pressure shaft of the turbomachine (3), reversible AC-DC power converters (39, 40), and a local electronic control unit (50) configured to control the supply to the local loads (36, 37, 38) of the turbomachine (3) based on the available electrical sources of the aircraft (1), the first and second electrical machines (31, 32) being first electrical sources when they operate in generator mode and local loads when they operate in motor mode.

3. The aircraft (1) according to any of claims 1 or 2, wherein the local electrical system (5) comprises an electrical outlet (41) allowing the connection of an external electrical source.

4. The aircraft (1) according to any of claims 1 to 3, wherein the local electrical system (5) further comprises a unidirectional static current converter (44) between the second local electrical distribution casing (34) and the first local electrical distribution casing (33).

5. The aircraft (1) according to any of claims 1 to 4, wherein the local electrical system (5) further comprises a local energy storage means (45) associated with a DC/DC converter (46) forming a second electrical source.

6. The aircraft (1) according to any of claims 1 to 5, wherein the main electrical system (4) comprises two first subsystems (10) and a second backup subsystem (11), each first subsystem (10) comprising a first main electrical distribution casing (15) connected to the low-voltage electrical distribution network (7), a second main electrical distribution casing (16) connected to the propulsion electrical distribution network (8), a third main electrical distribution casing (17) connected to the non-propulsion electrical distribution network (6), the main electrical distribution casings (15, 16, 17) ensuring the interconnections between the available electrical sources of the aircraft, the loads (18, 22) of the main electrical system (4) and the electrical subsystems (10, 11).

7. The aircraft (1) according to claim 6, wherein each first electrical subsystem (10) further comprises a unidirectional static current converter (21) between the third main electrical distribution casing (17) and the first main electrical distribution casing (15), and a bidirectional static current converter (20) between the second main electrical distribution casing (16) and the third main electrical distribution casing (17).

8. The aircraft (1) according to any of claims 6 or 7, wherein each first electrical subsystem (10) comprises an auxiliary electrical machine (12) mechanically coupled to an auxiliary power group and associated with a reversible AC-DC power converter (19), and a main electronic control unit (51) configured to control the supply to the loads (18, 22) of the first subsystem (10) based on the available electrical sources of the aircraft (1), the auxiliary electrical machine (12) being a first electrical source when it operates in generator mode and a local load when it operates in motor mode.

9. The aircraft (1) according to any of claims 6 to 8, wherein each first electrical subsystem (10) comprises an electrical outlet (23) allowing the connection of an external electrical source.

10. The aircraft (1) according to any of claims 6 to 9, wherein each first electrical subsystem (10) further comprises an energy storage means (13) associated with a DC-DC converter (14) forming a second electrical source.

11. The aircraft (1) according to any of claims 6 to 10, wherein the second electrical subsystem (11) comprises a first backup electrical distribution casing (24) connected to the low-voltage electrical distribution network (7), a second backup electrical distribution casing (25) connected to the non-propulsion electrical distribution network (6), the backup electrical distribution casings (24, 25) being supplied by said at least first and/or second electrical sources when at least one of them is available, and the backup electrical distribution casings (24, 25) ensuring the interconnections between the available electrical sources of the aircraft (1) and the loads (26, 27) of the second electrical subsystem.

12. The aircraft (1) according to claim 11, wherein the first and second backup electrical distribution casings (24, 25) are each supplied by a backup generator (28) or by another electrical source in direct connection with the second backup electrical distribution casing (25).

13. The aircraft (1) according to any of claims 11 or 12, wherein the second electrical subsystem (11) comprises a backup electronic control unit (52) configured to control the supply to the loads (26, 27) of the second subsystem (11) based on the available electrical sources of the aircraft (1).
